# EUROPEAN PATENT APPLICATION

(11) **EP 1 434 151 A1**
(43) Date of publication of application: **30.06.2004**
(21) Application number: 02102884.0
(22) Date of filing: 23.12.2002
(51) Int. Cl.: G06F 17/60

(54) **Method for making a digital representation of a printed product**

(71) Applicant: AGFA-GEVAERT, 2640 Mortsel (BE)
(72) Inventor: Tuijn, Chris Agfa-Gevaert, Corp.IP Dept. 3800, 2640, Mortsel (BE); De Mangelaere, Peter, c/o AGFA-GEVAERT, B-2640 Mortsel (BE); Callewaert, Lieven, c/o AGFA-GEVAERT, B-2640 Mortsel (BE)

(57) **Abstract**

A method for making a digital representation of a printed product, the method including (a) getting input data that include a total number of content pages of the printed product, or a total number of inserts of the printed product, or a cover type of the printed product, or a binding method of the printed product; (b) generating from the input data a product structure (10) for digitally representing the printed product, wherein the product structure (10) includes a plurality of specific parts (11-22) that are cover parts (11), content parts (12-18) or insert parts (19), and wherein each specific part (11-22) includes a plurality of pages (25-28) for remaining connected together during manufacturing of the printed product.

## Description

### FIELD OF THE INVENTION

The present invention relates to printed products and particularly to making a digital representation of a printed product.

### BACKGROUND OF THE INVENTION

In the printing and publishing environment, different players interact in order to obtain print and publishing products, such as magazines, catalogues, promotional, corporate, book or specialty products in offset, flexo, screen, digital, sheet- or web-fed printing. Such products are called "printed products" in this document. The main players that interact, in what is called in this document the "Graphic Enterprise", are the print buyer (or customer), the people in the workcenter, and the customer service representative who is the communicator between the first two main players. Different software tools are used within the Graphic Enterprise, such as pre-press workflow systems (such as Apogee Series 3 and Apogee X from Agfa), cost estimation modules, Management Information Systems (MIS), etc. Most of these tools operate on a digital representation of the product that will be printed. When organizing and streamlining the work within the Graphic Enterprise, the method according to which the digital representation of the printed product is obtained and also the way in which the printed product will be manufactured play a central role. Customarily, the digital representation of a printed product is based on the pages of the printed product.

There is still a need for an improved method for making a digital representation of a printed product.

### SUMMARY OF THE INVENTION

The present invention is a method for making a digital representation of a printed product as claimed in independent claim 1. Preferred embodiments of the invention are set out in the dependent claims. Preferably, a method in accordance with the invention is implemented by a computer program as claimed in claim 11. The invention also includes a data processing system (such as a computer, a computer network system, etc.) comprising means for carrying out such a method and a computer readable medium comprising program code adapted to perform such a method. In a method in accordance with the invention, it is preferred to make a digital representation of a printed product based on parts instead of based on pages. As illustrated by Figs. 1 and 2, the parts 11-22 constitute a product structure 10 for digitally representing the printed product. A part 11-22 includes a plurality of pages 25-28 that remain together during the manufacturing process of the printed product. Fig. 3 shows some examples of parts 20-22.

In a specific embodiment of the invention, a part comprises a binding point 35 (as shown in Fig. 3) that indicates where the part will be bound to another part.

In a preferred embodiment of the invention, at least some parts of the product structure comprise, as is the case for parts 21 and 22 in Fig. 3, a plurality of pages 25-28 that not only remain together during the manufacturing process of the printed product but that also are folded during the manufacturing process.

In a very preferred embodiment of the invention, a part comprises a binding point and at least some parts of the product structure comprise a plurality of pages that remain together and that are folded during the manufacturing process of the printed product.

Preferably, as shown in Fig. 2, relations 31, 32 are defined that indicate how the parts 12-14, 15-17 together constitute the product structure 10.

From the product structure 10, the page order, i.e. the pagination, of the printed product may be determined.

In this document, a part, a page and other suchlike terms may denote the physical entity, the digital representation of the physical entity, a depiction thereof on a computer display. What is meant, can be determined from the context.

A computer program denotes, in this document, an aggregate of computer program code means, that may be organized in one entity, or in a plurality of entities that may run independently of each other (e.g. generating a product structure for a printed product, and generating, based on that product structure, an imposition plan for the printed product, may be performed by two different entities: the first entity generates the product structure, and the second entity generates the imposition plan; both entities together are denoted, in this document, as "a computer program").

An advantage of a method in accordance with the invention is that the same values of a set of properties may be assigned to all pages of a part; e.g. all pages of a part have the same type of printing substrate (such as a particular type of paper, of polyethylene coated paper, of plastic, etc.); usually, all pages of a part also have the same page size.

Another advantage of the invention is related to the imposition process. Imposition is the pre-press process of arranging the pages, that will be printed on the same sheet, in such a way that a proper sequence or position of each page relative to the other pages on the sheet is achieved. Arranging the pages is required because, when e.g. a book or a leaflet is manufactured, several pages of the book or leaflet are printed by the printing press on the same sheet. After printing, the sheet is folded and possibly cut and bound together with other processed sheets. In the resulting book or leaflet, the pages of course have to follow one another in the correct order; this is a job of the imposition process. Thus, the pre-press process of imposition is performed in view of post-press processes such as fold and cut operations. An imposition plan represents the layout according to which the individual pages, that will be printed on the same sheet, are arranged on that sheet. A "section", also called signature, is the entity that is obtained by folding that sheet, after printing, by a folding machine. More information on imposition, on imposition plans and on related terms can be found in patent application EP 02 102 092.0, filed on August 2, 2002. An advantage of a method in accordance with the invention is that, based on the product structure, an imposition plan of the printed product may be generated. The advantage of using a product structure with parts is that parts already provide more useful structural information, and that they thus allow a more meaningful mapping to the sections and the imposition plan.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 shows an embodiment in accordance with the invention as shown to a user on a computer display;
Fig. 2 shows another embodiment in accordance with the invention;
Fig. 3 shows examples of parts as used in embodiments in accordance with the invention.

### DETAILED DESCRIPTION OF THE INVENTION

A particular embodiment of the invention is encompassed in a project management system that organizes and streamlines the work within the Graphic Enterprise. In this system, a digital representation of a printed product is made in several steps, as follows.

In a first step, input data are obtained from a user, who is typically the customer service representative (CSR) mentioned already above. The input data may be obtained via a computer display. The input data relate to different portions of the printed product: the cover, the content, inserts. An insert is printed material, typically one or more advertisements, that is inserted between the content pages. Usually, inserts do not affect the pagination of the content; if e.g. an insert of four pages is located between page seven and page eight of the content, page eight retains its page number and does not get page number twelve. The input data may include data selected from the group consisting of the total number of content pages, the total number of inserts (which may be zero), the cover type (e.g. self-cover, which means that there is no separate cover: the outer pages of the content serve as the cover; or separate cover - same binding as content; or separate cover - additional binding) and the binding method of the printed product (such as saddle-stitching, side-stitching, center-sewing, side-sewing, adhesive binding, or a single-leaf binding method such as ring binding, or loose-leaf binding as used e.g. for newspapers). Preferably, the input data include all of these parameters, i.e. the total number of content pages, the total number of inserts, the cover and the binding method. More preferably, the input data also include the typical number of parts per section. The input data may also comprise the page orientation (portrait or landscape), the size (width and height) of the finished printed product), the type or types of printing substrate (usually a paper type) that are to be used, the colors, and other data that specify what the printed product will look like.

In a second step, additional input data may be obtained from the user. An example is the specification of the data to define a foldout (a foldout is an item that can be folded out of the printed product, e.g. part 22 in Fig. 3 may be a foldout in a magazine or book). Moreover, operations on the input data may be performed, e.g. the user may modify input data. Further, content matter may be associated to the pages, which is typically done by the end-user. Content matter is e.g. an image or a text that has to appear in a given location in the printed product. It is assumed that the content matter is available as a set of files of data. Content matter may be associated to pages as follows, by means of so-called naming lists. Pages are assigned to naming lists, taking into account the naming convention of the files with content matter. There are two kinds of naming lists. Whereas the "internal naming lists" are used to label the pages internally, the "external naming lists" will have a direct mapping to the filename conventions the customer (or the company that delivers the content matter) will use.

After this second step, the project management system can start accepting the files that contain the content matter.

In a third step, a product structure for digitally representing the printed product is generated from the input data discussed above.

Fig. 1 shows a depiction of such a product structure 10 on a computer display 51. The product structure 10 that is shown in Fig. 1 contains a cover part 11, a set of content parts 12-15, 18 (for better readability, only some of the content parts are indicated by reference signs) and an insert part 19. In general, a product structure does not necessarily comprise all these parts; it may include a plurality of parts that are selected from the group of a cover part, a content part and an insert part.

As mentioned already above, a part includes a plurality of pages that remain together during the manufacturing process of the printed product. This is shown in Fig. 1 for part 18, that includes pages 25-28. Fig. 1 shows the product structure 10 of e.g. a magazine with a separate cover. The four pages 25-28 are printed on the same sheet: pages 26 and 27 on the front side of the sheet, and pages 25 and 28 on the back side of the sheet. As discussed above with respect to the imposition process, usually a large number of pages will be printed on the same sheet, e.g. thirty-two pages on the front side of the sheet and thirty-two other pages on the back side of the sheet; however, after folding and cutting of this sheet (i.e. after what is customarily called the cutting of the "flat"), only some of these pages remain together. These pages that remain together form a part.

Fig. 3 shows some other examples of parts. Part 20 includes only two pages, namely pages 25 and 26. Part 21 is analogous to part 18 in Fig. 1. Part 22 shows a foldout and includes six pages. Parts 21 and 22 are folded during the manufacturing process of the printed product, while part 20 is not.

In a specific embodiment of the invention, a part comprises a binding point 35 (as shown in Fig. 3) that indicates where the part will be bound to another part. Binding is to be interpreted very broadly: it encompasses all binding methods mentioned above, including loose-leaf binding.

Preferably, relations are defined between the parts that indicate how the parts together constitute the product structure 10. Fig. 2 shows a tree-like structure that represents a product structure 10. The relations between the parts in Fig. 2 are in-relations 31 or next-relations 32. Parts 12, 13 and 14 are to be inserted in each other, and are thus connected by an in-relation. The same holds for parts 15-17. There is a next-relation between parts 12 and 15, indicating that part 12 (with parts 13 and 14 inserted in it) and part 15 (with parts 16 and 17 inserted) are stacked on top of each other. Finally, the thus obtained entity is inserted into the cover part (which is the part not indicated by a reference sign in Fig. 2).

In Fig. 1, the content parts 12-45, 18 are shown in three rows; the parts in the same row are inserted in each other. This is also indicated by the axes 41 and 42, respectively the in- and the next-axis; these axes indicate the relation between the shown parts, in conformity with the in- and next-relations discussed in connection with Fig. 2. Fig. 1 thus illustrates another advantage of the invention, namely that the product structure 10 clearly reflects the structure of the printed product. The product structure 10 shown in Fig. 1 includes a single insert, "insert 1". Of course other product structures may include more inserts, or no insert at all. The user may perform operations on the displayed product structure 10, such as adding an additional part. He may add a row or a column, by means of button 52 respectively button 53.

An advantage of a method in accordance with the invention is that the same values of a set of properties may be assigned to all pages of a part; e.g. all pages of a part have the same type of printing substrate (such as a particular type of paper, of polyethylene coated paper, of plastic, etc.). Usually, all pages of a part also have the same page size (this is however in general not the case for a foldout). The set of printing colors is often also the same for all pages of a part, or at least for all pages at the same side (i.e. front side or back side) of a part. Thus, identical values for all or for some of these properties may be assigned to all pages of a part. It is possible to assign default values, that may still be modified later on.

In a fourth step, the user specifies how the printed product will be made; this step is also called the manufacturing phase in this document. The manufacturing phase may be implemented as follows. Parts are grouped in components. The components may be created from scratch by the user, or a set of default components may be derived from the product structure 10. Preferably, the relations 31, 32 between the parts are used in deriving this set of default components. The set of default components includes a cover component for the cover (in case of a separate cover), at least one content component for the content, and an insert component for each insert. The components, however obtained, may then be edited. New components may be added. The purpose is to group those parts in a component, that will be manufactured in the same way. The product structure 10 thus comprises parts, and it also comprises components.

This method is advantageous when generating the imposition plan for the printed product. In fact, as is clear from the discussion above, using the parts as the atomic elements to determine the imposition plan provides more useful structural information than simply using the pages, which is customary practice. A PJTF (portable job ticket format) or a PDF (portable document format) based imposition layout scheme may be associated to a component. Such a PJTF file (or PDF file) describes the position of the pages on the flat, their orientation, etc. The parts, and the sequence of the parts in the component, already suggest a meaningful number scheme that may be matched with the PJTF or PDF files, in particular with the so-called runlists of these files. In this way, a meaningful mapping of these runlists to the final pages of the printed product is obtained.

The invention is not limited to the embodiments described above. Instead of obtaining the input data from the user, as is the case in the particular embodiment discussed above, the input data may also be obtained in another way, e.g. as output from a computer program.

Those skilled in the art will appreciate that numerous modifications and variations may be made to the embodiments disclosed above without departing from the scope of the present invention.

### List of reference signs

10 : product structure
11 : cover part
12 - 18 : content part
19 : insert part
20 - 22 : part
25 - 28 : page
31 : in-relation
32 : next-relation
35 : binding point
41 : axis
42 : axis
51 : computer display
52 : button
53 : button

## Claims

1. A method for making a digital representation of a printed product comprising the steps of:
- getting input data that include data selected from the group consisting of a total number of content pages of said printed product, a total number of inserts of said printed product, a cover type of said printed product and a binding method of said printed product;
- generating from said input data a product structure (10) for digitally representing said printed product, wherein said product structure (10) includes a plurality of specific parts (11-22) selected from the group consisting of a cover part (11), a content part (12-18) and an insert part (19), and wherein each specific part (11-22) includes a plurality of pages (25-28) for remaining connected together during manufacturing of said printed product.

2. The method according to claim 1 wherein said input data includes a total number of content pages of said printed product, a total number of inserts of said printed product, a cover type of said printed product and a binding method of said printed product.

3. The method according to any one of the preceding claims further comprising the step of:
- determining from said product structure (10) a page order of said printed product.

4. The method according to any one of the preceding claims wherein each specific part (11-22) comprises a binding point (35) for binding said each specific part (11-22) to another part (11-22) of said product structure (10).

5. The method according to any one of the preceding claims wherein said plurality of pages (25-28) is for being folded during manufacturing of said printed product.

6. The method according to any one of the preceding claims further comprising the step of:
- selecting a first part (12) out of said specific parts (11-22);
- selecting a second part (13, 15) out of said specific parts (11-22), wherein said second part (13, 15) is different from said first part (12);
- defining a relation (31, 32) between said first part (12) and said second part (13, 15), wherein said relation is selected from the group of an in-relation (31), specifying that said first part (12) and said second part (13) are inserted in each other, and a next-relation (32), specifying that said first part (12) and said second part (15) are stacked on top of each other.

7. The method according to any one of the preceding claims further comprising the steps of:
- getting said input data from a user;
- displaying said product structure (10) to said user;
- modifying said product structure (10) by said user by adding an additional part (11-22) to said product structure (10).

8. The method according to any one of the preceding claims further comprising the step of:
- assigning to all pages (25-28) of a selected part (18) out of said specific parts (11-22) identical values of a number of properties, wherein said properties are selected from the group of a printing substrate type, a page size and a set of printing colors used.

9. The method according to any one of the preceding claims further comprising the step of:
- generating, based on said product structure (10), an imposition plan for said printed product.

10. A data processing system comprising means for carrying out the steps of the method according to any one of claims 1 to 9.

11. A computer program comprising computer program code means adapted to perform the method according to any one of claims 1 to 9 when said program is run on a computer.

12. A computer readable medium comprising program code adapted to carry out the method according to any one of claims 1 to 9 when run on a computer.

## Amended claims

### Amended claims in accordance with Rule 86(2) EPC.

1. A method for making a digital representation of a printed product comprising the steps of:
- getting input data that include data selected from the group consisting of a total number of content pages of said printed product, a total number of inserts of said printed product, a cover type of said printed product and a binding method of said printed product;
- generating from said input data a product structure (10) for digitally representing said printed product;
**characterized in that** said product structure (10) includes a plurality of specific parts (11-22) selected from the group consisting of a cover part (11), a content part (12-18) and an insert part (19), wherein each specific part (11-22) includes a plurality of pages (25-28) for remaining connected together during manufacturing of said printed product; and **in that** said method further comprises the step of:
- generating a separate digital representation for each of said specific parts.

2. The method according to claim 1 wherein said input data includes a total number of content pages of said printed product, a total number of inserts of said printed product, a cover type of said printed product and a binding method of said printed product.

3. The method according to any one of the preceding claims further comprising the step of:
- determining from said product structure (10) a page order of said printed product.

4. The method according to any one of the preceding claims wherein each of said specific parts (11-22) comprises a binding point (35) for binding said each specific part (11-22) to another part (11-22) of said product structure (10).

5. The method according to any one of the preceding claims wherein said plurality of pages (25-28) is for being folded during
